# EUROPEAN PATENT APPLICATION

(11) **EP 2 384 647 A1**
(43) Date of publication of application: **09.11.2011**
(21) Application number: 10462003.4
(22) Date of filing: 07.05.2010
(51) Int. Cl.: A23K 1/16, A23K 1/18

(54) **Feed additive compositions and method for the production thereof**

(71) Applicant: Adexgo Ltd., 8230 Balatonfüred (HU)
(72) Inventor: Tóth, Tamás, 9200 Mosonmagyaróvár (HU); György, Grosz, H-8230 Balatonfüred, (HU); Zoltan, Dr. Szilvassy,, H-4225 Debrecen, (HU); Zsolt, Dr. Juranyi, H-1067 Budapest, (HU)
(74) Representative: Petho, Arpad

(57) **Abstract**

The invention concerns animal feed additives. Disclosed are novel solid rumen bypass feed additive compositions containing polyunsaturated fatty acid (PUFA) comprising oils as well as methods for the production of said compositions. Methods are also disclosed for producing milk and dairy products enriched in PUFA by using said novel feed additive compositions.

## Description

### Field of the invention

The invention lies in the field of animal feed additives. Disclosed are novel solid rumen bypass feed additive compositions containing polyunsaturated fatty acid (PUFA) comprising oils as well as methods for the production of said compositions. Methods are also disclosed for producing milk and dairy products enriched in PUFA by using said novel feed additive compositions.

### Background of the invention

Fatty acids are in the focus of interest nowadays. This correlates with their versatile roles in the body. It is especially true in the case of polyunsaturated fatty acids (PUFA), particularly for the n-6 and n-3 fatty acids. Linoleic acid, an n-6 fatty acid (C18:2), and α-linoleic acid, an n-3 fatty acid (C18:3) are the most prominent ones in food and in forage. Both the *n*-3 α-linolenic acid and *n*-6 linoleic acid are essential nutrients which must be obtained from food. Insufficient intake of them might cause several health problems (e.g.: skin irritation, disorders of brain and retina development, etc.). They have multiple roles in the body: they affect the fatty acid metabolism and they are important parts of the cell membrane. Linolenic acid and linoleic acid serve as precursors of eicosanoids, which have hormone-like properties. Linolenic acid and α-linoleic acid are converted to other important polyunsaturated fatty acids by desaturation and elongation. Linolenic acid is converted to arachidonic acid (C20:4), linoleic acid is converted to eicosapentaenoic acid (C20:5, EPA), and docosahexaenoic acid (C22:6, DHA).

The α-linoleic acid decreases serum cholesterol level, eicosapentaenoic acid decreases the level of triglycerides and it serves as a precursor for eicosanoid synthesis. Sufficient intake of n-3 fatty acids reduces hypertonia during pregnancy and premature birth, while docosahexaenoic acid (DHA) is an important factor for normal development of the foetal brain and retina.

Conjugated linoleic acids are stereoisomers of linoleic acid (C18:2), which belongs to the polyunsaturated fatty acids (PUFA), and have double bounds in conjugated position.

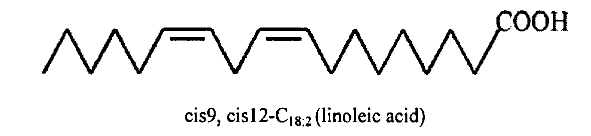

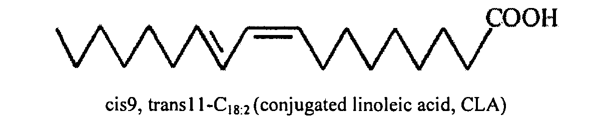

The double bonds are usually in the 9, 11, or 10, 12 positions, however, they could be in other (8, 11; or 11, 13) positions also. Both double bonds can have cis or trans configuration. The most frequent natural CLA isomer is the cis9, trans11-C18:2 modification.

Since conjugated linoleic acids are produced in the rumen of ruminants as an effect of microbial metabolism, their primary source is food made of ruminants in human alimentation. There is a low level of linoleic acid in the body of monogastric animals, hence food originating from them contain a little amount, too. Their linoleic acid intake comes from the forage they get.

Therefore it is desirable to increase the PUFA content of milk thereby increasing the consumption of these beneficial fatty acids. It is widely accepted that the CLA content of milk produced by a lactating cow is higher if the cow is fed solely on grass. However, such a strict grass diet is not competitive economically in numerous countries of the world (e.g. in Hungary or in the USA).

Another possible solution to increase the PUFA content of milk is to increase the content of these fatty acids in the feed ration of ruminants. US 5,770,247 discloses a method of increasing the conjugated linoleic acid content of milk. The disclosed method consists of feeding to a lactating cow a diet which contains about 1% to about 5% of a vegetable oil containing linoleic or linolenic acid.

Direct supplementation of animal feed with PUFA containing oils, however, has several drawbacks. Firstly about 90% of natural PUFA containing oils are degraded in the rumen. Moreover such oils have a negative effect on the microbial fermentation that takes place in the rumen. Due to the decreased fermentation the degradation of natural fibres also decreases if the forage of the animals is supplemented with natural oils. Furthermore, the milk production as well as the fat and protein content of the produced milk also decreases.

To avoid the above negative effects on milk production, PUFA containing oils have to be protected from degradation. One way to achieve this protection is to encapsulate said oils. US 5,874,102 discloses a dietary fatty acid salt product consisting of encapsulated granules which comprise: (A) a core matrix comprising at least one C₁₄ -C₂₂ fatty acid salt of an alkaline earth metal; and (B) a polymeric coating in the form of a continuous film. Although the disclosed product has a very good protection in the rumen, such encapsulation is a rather expensive procedure, therefore, the use of said product in industrial scale milk production is very limited.

Therefore, there is a strong need in the art for a feed additive to increase the PUFA content of milk which additive is more cost effective than the presently available feed additives and which additive is able to increase the PUFA content of milk without the above described drawbacks.

### Brief description of the invention

Our aim was to develop a new PUFA comprising oil containing rumen bypass feed additive composition that is:
- solid, therefore it is easy to mix into the forage of a ruminant,
- protected from degradation in the rumen and
- made from inexpensive constituents thereby allowing cost effective production of PUFA enriched milk and dairy products.

Preferably, the use of said rumen bypass feed additive composition for complementing the feed of a milk-producing animal does not change the organoleptic characteristics of the produced milk.

### Detailed description of the invention

Thus, the present invention relates to a solid rumen bypass feed additive composition comprising granules of a solid carrier carrying, up to 70% by weight, a PUFA comprising oil, being fully or partially covered by a coating comprising a hydrogenated fat and/or a wax the melting point of which is higher than room temperature. According to a preferred embodiment the average diameter of said granules is around 1-2 mm. According to a further preferred embodiment said solid carrier further carries hydrogenated fat. Said composition may contain an antioxidant e.g. α-tocopheryl acetate. Such a solid composition, compared to an oil or any liquid composition may be advantageously used in the feed rations of ruminants.

According to a preferred embodiment, said PUFA comprising oil is selected from a group consisting of fish oil, linseed oil, rapeseed oil, soybean oil, pumpkinseed oil and any combinations thereof.

According to a further preferred embodiment, said solid carrier is selected from a group consisting of minerals, mineral feed supplements, ground grains, cereal flakes, cereal byproducts and any combinations thereof. Examples of suitable carriers without limitation include bentonite; silica; perlite; lime; monocalcium phosphate (MCP); ground corn, wheat, barley, oat, rye; corn flakes; wheat flakes; oat flakes; rye flakes; corn-cob flour; wheat bran etc. Preferred carriers are silica and corn-cob flour.

In a still further preferred embodiment, said hydrogenated fat is of natural origin and/or said wax is beeswax.

The invention furthermore concerns a method for the production of a solid rumen bypass feed additive composition, wherein
(a) an oil comprising PUFA is mixed with a solid carrier and
(b) the mixture of step (a) is coated with a hydrogenated fat and/or wax the melting point of which is higher than room temperature.

According to a preferred embodiment, hydrogenated fat is further mixed with said PUFA comprising oil and the solid carrier in step (a) and then the mixture obtained in step (a) is coated with a hydrogenated fat and/or wax the melting point of which is higher than room temperature in step (b).

In a still further preferred embodiment, said coating is performed by adding melted hydrogenated fat and/or wax under continuous stirring to the mixture of step (a) and subsequently the mixture is allowed to cool to room temperature.

The present invention further concerns a method for producing PUFA-enriched milk or dairy products, comprising the steps of:
(a) complementing the feed of a milk-producing animal with a solid rumen bypass composition according to the invention or a composition produced according to a method of the invention and
(b) feeding the milk-producing animal with the complemented feed of step (a)
(c) obtaining milk from the milk-producing animal having been fed according to step (b).

The person skilled in the art will certainly comprehend that in the case of the application of certain PUFA comprising oils in the milk producing method of the invention, it can be of special importance to obtain the desired enrichment of PUFA in the produced milk by using as little amount of PUFA comprising oil in the applied feed as possible in order to avoid certain drawbacks, such as negative effects on the microbial fermentation taking place in the rumen, decrease in milk production or in the fat and/or protein content of the produced milk or negative organoleptic effects. Therefore, it is a special advantage of the rumen bypass feed additive composition of the invention that its application can provide a significant increase in the PUFA content of the produced milk even if the animals are fed with a complemented feed comprising overall a very small amount, i.e. significantly less than 1% by weight, of the applied PUFA comprising oil. Therefore, in an advantageous embodiment of the invention, said complementing in step (a) of the above described milk producing method of the invention provides a complemented feed which contains not more than 0.75% by weight of said PUFA comprising oil, or more preferably not more than 0.66% by weight, or still more preferably not more than 0.35% by weight.

The person skilled in the art will further comprehend that even though the advantageous effects of the invention has so far been only demonstrated experimentally for cattle, the rumen bypass feed additive compositions of the invention are also useful for enriching the milk in PUFA of any other milk-producing ruminants like goats, sheep, bison, yaks, water buffalo, deer, camels, alpacas, llamas, etc. Therefore, the special feeding and milk-producing methods of the invention will by no means be limited to cattle but are also useful for enriching the milk in PUFA of any milk-producing ruminants.

According to a further preferred embodiment, the above method of the invention further comprises a step of
(d) preparing a PUFA-enriched dairy product from the PUFA-enriched milk obtained in step (c).

Said dairy product can be any dairy product like condensed milk, milk powder, cream, cheese, yogurt, etc., and preferably, as a versatile primary diary product, milk powder. Said dairy product may be produced directly from the milk produced according to the invention or from a milk powder or other diary product produced from the milk produced according to the invention.

The solid rumen bypass feed additive composition according to the invention can be prepared in a cost effective way as compared to the presently available encapsulated bypass compositions while it not only provides a good protective effect but neither milk production nor the fat and protein content of the produced milk decreases significantly by using said composition. By using said solid rumen bypass feed additive composition, the production of PUFA-enriched milk is also highly cost effective. Furthermore, the produced PUFA-enriched milk has very good organoleptic characteristics.

The solid rumen bypass composition according to the invention allows the containment of, up to 70% by weight, a PUFA comprising oil. Said oil is preferably rich in n-3 and/or n-6 polyunsaturated fatty acids and can be of animal or plant origin. The use of, for example, the following PUFA containing oils can beneficially modify the fatty acid content of milk: fish oil, linseed oil, rapeseed oil, soybean oil, pumpkinseed oil or any combinations thereof.

The solid rumen bypass composition according to the invention also comprises a solid carrier. Said carrier may be any carrier that can be used in animal feeds. The advantageous carrier to be used depends on the desired oil content of the bypass composition and a person skilled in the art can select a suitable carrier depending on said desired oil content. Possible carriers without limitation are the following: bentonite; silica; perlite; lime; monocalcium phosphate (MCP); ground corn, wheat, barley, oat, rye; corn flakes; wheat flakes; oat flakes; rye flakes; corn-cob flour; wheat bran etc. The selected oil source that comprises PUFA - optionally after supplementing with natural or artificial antioxidants - is first mixed with a carrier or a combination of carriers and, optionally, with hydrogenated fat, too. The obtained composition is solid which facilitates the further use of the product. Then hydrogenated fat and/or wax is added to the composition the melting point of which is higher than room temperature under continuous stirring.

The rumen protected bypass compositions of the invention have the following beneficial effects and features:
- The solid physical form of the compositions of the invention allows their use directly in the TMR mixer and in the feed of ruminants, enabling the effective, versatile and simple industrial applicability of said compositions.
- The compositions of the invention provide about 70% protection for the PUFA comprising oil in the rumen compared to the 10-12% protection of not protected natural PUFA comprising oils.
- Since oils and fats are not natural nutrients for ruminants, natural oils, especially oils rich in unsaturated fatty acids (e.g. fish oil, rapeseed oil, soybean oil), have a negative effect on the microbial fermentation in the rumen. The degradation of natural fibers decrease if ruminants are fed with untreated natural oils. The composition of the invention, in an appropriate dose, has no negative effect on the microbial fermentation process in the rumen.
- Compared to natural fish oil, the composition of the invention containing fish oil does not affect negatively the feed uptake of animals and the main organoleptic properties (e.g. taste, smell) of the produced milk.
- Compared to direct supplementation of milk with special fish oil, the indirect supplementation of milk through the fodder of the ruminant with the fish oil containing composition according to the invention does not have a negative effect on the organoleptic characteristics of the produced milk or milk products.
- The feed additive compositions of the invention are highly cost-effective and, therefore, enable the elaboration of simple industrial scale feeding regimes resulting in the production of highly PUFA enriched top quality milk and dairy products the production cost of which does not significantly exceed that of regular milk and milk products.

### Brief description of the drawings

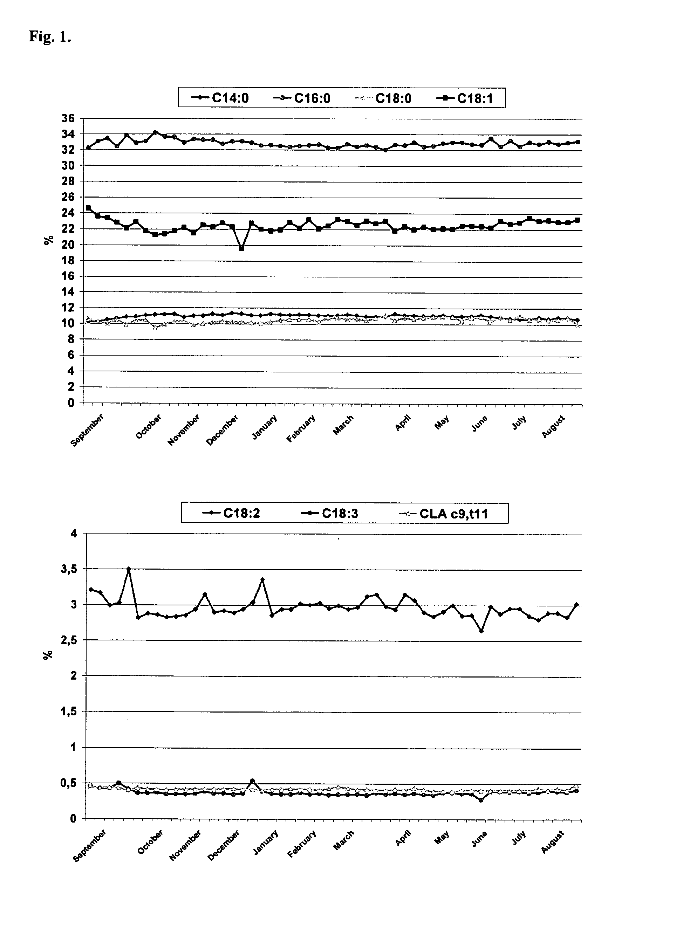

Fig. 1 is a graph showing the change in the content of some important fatty acids of milk during a one year period (percent of total fatty acid).

### Examples

### EXAMPLE 1

### Preliminary studies: Investigation of fatty acid content of Hungarian milks Material and methods

Milk was sampled once a week (on Wednesday) at *Óvártej Zrt.* in Mosonmagyaróvár. Farmers deliver 150-180,000 litres milk from 35-40 farms every day there. Delivered milk is stored in different silos. The survey period was: 09.01.2008 - 08.31.2009. There were four investigation periods: spring, summer, autumn and winter (each for 3 months). We did not have detailed information on forage methods used by the farmers.

The fatty acid content of milk fat samples was measured using a gas chromatograph (Agilent Technologies, 6890 N; HP, USA). The column specification was Supelco SPTM 2560 Fused Silica Capillary Column, 100 mx0.25 mm with 0.2 µm film thickness. Helium was used as carrier gas. Milk fat was extracted from milk by the method of Folch et al. (1957). A mixture of chloroform and methanol (2:1 ratio) was added to the milk fat samples, and 0.9% saline solution was applied to assist the separation of phases. After evaporation of solvents, samples were saponified with 1 n NaOH at 100 °C. BF 3-methanol was used for esterification of fatty acids and then the samples were solved in hexane, centrifuged, and dehydrated prior to the injection. Evaluation of data was performed by one-factor variant analysis (Kolmogorov-Smirnov test, Levene's test, oneway ANOVA), with SPSS 12.0 Windows Program (SPSS Inc., Chicago, USA).

### Results

Fatty acid composition is shown in Table 1. As Table 1 shows there is significant difference in the saturated fatty acid (SFA) ratio between the different seasons. The highest SFA level was measured in the milk sampled during winter (64.65%), while the lowest one was measured in the milk sampled during summer (63.97%). The difference was 0.68% fatty acid %. There were significant differences between C10:0, C11:0, C12:0, C13:0, C14:0, C15:0, C16:0 and C18:0 in the SFA group. The amount of some important fatty acids (e.g. C8:0, C10:0, C12:0, C14:0) were higher in the winter samples, while other also important fatty acids (C16:0, C18:0) were higher in the summer samples in the SFA group. There was a small, however, significant difference between the level of C11:0, C12:0, C16:0 and C18:0 fatty acids in the samples were taken during autumn or spring. The amount of myristic acid (C14:0) is the lowest in the autumn and summer samples, while it is the highest in winter and spring samples (Figure 1.). On the other hand, the amount of the palmitic acid (C16:0) is the highest in the autumn samples, then it decreases during winter and spring, then it is followed by a small increase during summer. The level of stearic acid (C18:0) is lower during winter and autumn, while it is higher during spring and summer.

There was a significant difference between the winter level (27.91%) and summer level (28.68%) of mono unsaturated fatty acids (MUFA). There was no significant difference between the autumn (28.10%) and spring (28.17%) samples. There were significant differences, however, between all studied fatty acids during different seasons in the MUFA group. The levels of the two most important fatty acids (palmitic acid and oleic acid) were the highest in the summer samples in this group. The ratio of C18:1 decreased during winter and spring.

There were no significant differences between the ratios of PUFAs measured in different seasons. The smallest value was measured in the summer samples (4.13%), while the highest was measured in the autumn samples (4.29%). There was a small, however, significant difference in the case of C18:2, C20:3 and C20:4 fatty acids. The difference in the ratio of PUFA was due to some protuberant data. The CLA and linolenic acid contents of the milk were uniform during one year period, without these protuberant data.

There was a minimal difference between the amount of CLA in the winter and summer milk samples (0.41% vs. 0.42%) in the studied West-Hungarian region. The explanation of this result is that Hungarian neat farms use conserved forage in mono-dietary form nowadays. This constant, but low level means that the positive effect of CLA on human health cannot be achieved.

**Table 1: Fatty acid composition of milk in different seasons (09.01.2008 - 08.31.2009)**

| | | | | | |
|---|---|---|---|---|---|
| (percent of total fatty acid; values are means ± SD based on 13 observations) | | | | | |

| **Fatty acid** | **Name** | **Autumn** | **Winter** | **Spring** | **Summer** |
|---|---|---|---|---|---|
| C₈₀ | Caprylic acid | 1.04±0.05 | 1.11±0.08 | 1.12±0.16 | 1.03±0.08 |
| C₁₀₀ | Capric acid | 2.78±0.13^{b} | 3.00±0.17^{a} | 2.81±0.03^{b} | 2.65±0.10^{c} |
| C₁₁₀ | Undecanoic acid | 0.34±0.02^{a} | 0.34±0.01^{a} | 0.32±0.00^{b} | 0.31±0.01^{b} |
| C₁₂₀ | Lauric acid | 3.44±0.21b^{c} | 3.63±0.07^{a} | 3.52±0.05^{b} | 3.31±0.09^{c} |
| C₁₃₀ | Tridecanoic acid | 0.22±0.02^{ab} | 0.23±0.01^{a} | 0.21±0.00^{b} | 0.20±0.00^{c} |
| C₁₄₀ | Myristic acid | 10.83±0.33^{b} | 1!.17±0.10^{a} | 11.07±0.10^{ab} | 10.82±0.17^{bc} |
| C₁₅₀ | Pentadecanoic acid | 1.22±0.11^{ab} | 1.22±0.03^{a} | 1.18±0.01^{b} | 1.21±0.02^{a} |
| C₁₆₀ | Palmitic acid | 33.25±0.54^{a} | 32.74±0.29^{bc} | 32.59±0.27^{b} | 32.92±0.29^{c} |
| C₁₇₀ | Heptadecanoic acid | 0.68±0.07 | 0.71±0.02 | 0.72±0.00 | 0.73±0.02 |
| C₁₈₀ | Stearic acid | 10.14±0.30^{b} | 10.34±0.21^{c} | 10.74±0.18^{a} | 10.62±0.26^{a} |
| C₂₀₀ | Arachidic acid | 0.14±0.00 | 0.14±0.00 | 0.14±0.00 | 0.15±0.00 |
| C₂₁₀ | Heneicosanoic acid | 0.02±0.00 | 0.02±0.00 | 0.02±0.00 | 0.02±0.00 |
| **SFA** | **Saturated fatty acids** | **64.10±1.03^{ab}** | **64.65±0.38^{a}** | **64.44±0.29^{a}** | **63.97±0.39^{b}** |
| C₁₄₁ | Myristoleic acid | 0.95±0.03^{a} | 0.93±0.02^{a} | 0.88±0.01^{b} | 0.89±0.02^{b} |
| C₁₆₁ | Palmitoleic acid | 2.13±0.05^{a} | 2.09±0.03^{b} | 2.07±0.02^{b} | 2.14±0.05^{a} |
| C₁₇₁ | Heptadeceneoic acid | 0.22±0.00^{b} | 0.21±0.00^{b} | 0.21±0.00^{b} | 0.23±0.00^{a} |
| C₁₈₁ | Oleic acid | 22.46±0.98^{ab} | 22.17±0.90^{b} | 22.49±0.49^{ab} | 22.85±0.37^{a} |
| c-C_{18.1} | Vaccenic acid | 0.67±0.12^{b} | 0.63±0.15^{b} | 0.72±0.13^{ab} | 0.80±0.07^{a} |
| 9t-C₁₈₁ | Elaidic acid | 1.56±0.19^{b} | 1.78±0.09^{a} | 1.70±0.11^{ab} | 1.66±0.16^{b} |
| C₂₀₁ | Eicosenoic acid | 0.11±0.00^{a} | 0.10±0.00^{b} | 0.10±0.00^{b} | 0.11±0.00^{ab} |
| **MUFA** | **Mono-unsaturated fatty acids** | **28.10±0.76^{b}** | **27.91±0.88^{b}** | **28.17±0.46^{ab}** | **28.68±0.36^{a}** |
| C₁₈₂ (n-6) | Linoleic acid | 3.00±0.20^{ab} | 2.98±0.12^{ab} | 2.99±0.09^{a} | 2.87±0.09^{b} |
| CLA (c9, t11) | Conjugated linoleic acid (cis-9, trans-11) | 0.42±0.01 | 0.42±0.00 | 0.41±0.02 | 0.41±0.02 |
| C₁₈₃ (n-6) | γ-linoleic acid | 0.03±0.00 | 0.03±0.00 | 0.03±0.00 | 0.03±0.00 |
| C₁₈₃ (n-3) | Linolenic acid | 0.39±0.04 | 0.37±0.05 | 0.35±0.01 | 0.37±0.03 |
| C₂₀₂ (n-6) | Eicosadienoic acid (cis-11, 14) | 0.03±0.00 | 0.03±0.00 | 0.03±0.00 | 0.03±0.00 |
| C₂₀₃ (n-6) | Eicosatrienoic acid | 0.11±0.00^{ab} | 0.12±0.00^{a} | 0.12±0.00^{a} | 0.11±0.00^{b} |
| C₂₀₄ (n-6) | Arachidonic acid | 0.19±0.00^{b} | 0.19±0.00^{b} | 0.20±0.00^{a} | 0.19±0.00^{ab} |
| C₂₀₅ (n-3) | Eicosapentaenoic acid | 0.02±0.00 | 0.02±0.00 | 0.02±0.00 | 0.02±0.00 |
| C₂₂₂ (n-6) | Docosadienoic acid | 0.01±0.00 | 0.01±0.00 | 0.01±0.00 | - |
| C₂₂₄ (n-6) | Docosatetranoic acid | 0.03±0.00 | 0.04±0.00 | 0.04±0.00 | 0.04±0.00 |
| C₂₂₅ (n-3) | Docosapentaenoic acid | 0.06±0.00 | 0.05±0.00 | 0.06±0.00 | 0.06±0.00 |
| **PUFA** | **Poly-unsaturated fatty acids** | **4.29±0.24** | **4.26±0.14** | **4.26±0.10** | **4.13±0.14** |
| *UFA* | *Unsaturated fatty acids* | *32.39* | *32.17* | *32.43* | *32.81* |
| *Other fatty acids* | *Not identified fatty acids* | *3.51* | *3.18* | *3.13* | *3.22* |

| | | | | | |
|---|---|---|---|---|---|
| a,b,c: P<0.05 | | | | | |

### EXAMPLE 2

*The used solid rumen bypass feed additive composition of the invention was produced according to the following protocol*
Step 1: The carrier material (corncob flour and tixosil) and the hydrogenated fat were measured into the mixing equipment and the mixture was homogenized by continuous stirring.
Step 2: Fish oil and E-vitamin (dl-α-tocopheryl acetate) were mixed continuously with a low rpm into the homogenized mixture obtained in step 1. Then the resulting mixture was further stirred on normal speed for about 10 minutes.
Step 3: Measured and melted beeswax was mixed continuously with a low rpm into the mixture obtained in step 2. Then the resulting mixture was further stirred on normal speed for about 5 minutes.

The resulting mixture was then allowed to rest for 24 to 48 hours, then the material was sieved and finally filled into polyethylene lined bags. The average diameter of the so obtained granules of the composition were around 1-2 mm.

### Composition of the rumen bypass feed additive composition used in the below experiments:

| | |
|---|---|
| Corncob flour: | 30.0% |
| Hydrogenated fat: | 9.0% |
| Beeswax: | 2.0% |
| Fish oil*: | 50.0% |
| Vitamin E (oil): | 0.002% |
| Tixosil: | 8.998% |
| All in all: | 100% |

| | |
|---|---|
| *"SOLOROIL", dealer: Sopropéche, Boulogne-Sur-Mer, France | |

### EXAMPLE 3

### Effects of the rumen bypass feed additive composition of the invention on degradability and rumen fermentation In situ studies

Degradation of the fat content of the bypass product produced according to the method disclosed in Example 2 in the rumen was investigated in four (circa 600 kg body weight) Holstein Friesian steers using the in situ method. The used bags (12x6 cm) were made of Scrynel with 40 micron pores (n = 5). There was 2 g bypass product in each bag (13.9 mg/cm2). Incubation time was: 0, 2, 4, 8, 16, 24 and 48 hours. The experiment was repeated times (n = 6).

The degradation of the fat content of the bypass product in the rumen was between (end values): 62-76%. This means that the bypass product of the invention has circa 70% protection in the rumen.

### Effect on rumen fermentation

Four rumen-cannulated Holstein-Frisesian steers were used in this study. Animals did not get the rumen bypass product of the invention during the control period. However, they got said bypass product in an amount constituting 2.2% of the daily feed intake (0.25 kg/animal/day) during the experimental period. Rumen fluid was taken out from the animals through the cannula four times a day (before morning feeding, then 2, 4 and 6 hours after feeding) during the five-day experimental period after the ten-day pre-feeding period. The following parameters were measured: pH, NH3 and volatile fatty acid amounts (acetic acid, propionic acid, butyric acid, etc.), microbial activity. The experiment was replicated two times (n = 2). Results are shown in Table 2.

**Table 2: Results of feeding the bypass omega-3 product of the invention on some parameters of rumen fluid (Samples taken before feeding)**

| **Name** | **Control period** | **Experimental period** |
|---|---|---|
| pH | 6.88±0.12 | 6.88±0.15 |
| NH₃, mmol/l | 3.75±2.21 | 4.73±2.37 |
| TVFA¹, mmol/l | 102.58±11.65 | 105.91±7.75 |
| Acetate, mmol/l | 73.84±8.69 | 72.16±6.08 |
| Propionate, mmol/l | 16.66±1.83 | 20.47±5.49* |
| Acetate/Propionate | 4.43 | 3.52 |
| i-butyrate, mmol/l | 0.60±0.13 | 0.57±0.11 |
| n-butyrate, mmol/l | 10.14±1.72 | 10.92±1.10 |
| i-valeriate, mmol/l | 1.00±0.18 | 1.30±0.24* |
| n-valeriate, mmol/l | 0.31±0.04 | 0.47±0.29* |

| | | |
|---|---|---|
| *p<0.05 ¹TVFA= total volatile fatty acids | | |

| (Samples taken after 2 hours of feeding) | | |
|---|---|---|
| **Name** | **Control period** | **Experimental period** |
| pH | 6.55±0.17 | 6.52±0.13 |
| NH₃, mmol/l | 9.11±4.79 | 9.76±2.54 |
| KNO₂ reduction, 0.2 ml, min. | 3.12±0.49 | 3.08±0.40 |
| KNO₂ reduction, 0.5 ml, min. | 5.15±2.34 | 5.16±1.73 |
| KNO₂ reduction 0.7 ml, min. | 7.62±2.99 | 7.37±2.74 |
| TVFA¹, mmol/l | 94.83±12.40 | 93.80±9.59 |
| Acetate, mmol/l | 69.47±11.83 | 62.31±8.18 |
| Propionate, mmol/l | 16.07±2.35 | 19.48±3.35* |
| Acetate/Propionate | 4.32 | 3.19 |
| i-butyrate, mmol/l | 0.52±0.16 | 0.42±0.13 |
| n-butyrate, mmol/l | 10.32±2.10 | 10.04±2.30 |
| i-valeriate, mmol/l | 1.04±0.24 | 1.19±0.24 |
| n-valeriate, mmol/l | 0.68±0.15 | 0.71±0.16 |

| | | |
|---|---|---|
| *p<0.05 ¹TVFA= total volatile fatty acids | | |

| (Samples taken after 4 hours of feeding) | | |
|---|---|---|
| **Name** | **Control period** | **Experimental period** |
| pH | 6.45±0.16 | 6.30±0.17 |
| NH₃, mmol/l | 4.64±2.34 | 3.14±1.33 |
| TVFA¹, mmol/l | 110.94±13.83 | 108.11±10.49 |
| Acetate, mmol/l | 78.78±10.48 | 72.37±9.22* |
| Propionate, mmol/I | 18.05±2.31 | 21.43±4.50* |
| Acetate/Propionate | 4.36 | 3.37 |
| i-butyrate, mmol/l | 0.54±0.16 | 0.40±0.11* |
| n-butyrate, mmol/I | 11.77±2.05 | 11.96±1.60 |
| i-valeriate, mmol/I | 1.04±0.23 | 1.21±0.26 |
| n-valeriate, mmol/l | 0.72±0.17 | 0.73±0.22 |

| | | |
|---|---|---|
| *p<0.05 ¹TVFA= total volatile fatty acids | | |

| (Samples taken after 6 hours of feeding) | | |
|---|---|---|
| **Name** | **Control period** | **Experimental period** |
| pH | 6.61±0.14 | 6.46±0.21* |
| NH₃, mmol/l | 1.09±0.36 | 1.17±0.60 |
| TVFA¹, mmol/l | 105.36±11.84 | 108.39±11.70 |
| Acetate, mmol/l | 74.88±8.92 | 73.27±9.31 |
| Propionate, mmol/l | 16.74±1.67 | 21.31±5.65* |
| Acetate/Propionate | 4.47 | 3.43 |
| i-butyrate, mmol/l | 0.54±0.14 | 0.41±0.16* |
| n-butyrate, mmol/l | 11.60±2.33 | 11.63±2.82 |
| i-valeriate, mmol/l | 1.02±0.14 | 1.19±0.28* |
| n-valeriate, mmol/l | 0.56±0.16 | 0.56±0.27 |

| | | |
|---|---|---|
| *p<0.05 ¹TVFA= total volatile fatty acids | | |

The rumen bypass feed additive composition of the invention did not cause unfavorable effects on the studied fermentation parameters in the rumen. It decreased the acetic acid concentration of the rumen fluid due to its circa 70% stability. The main cause of this effect is that fat particles enfold the forage particles in the rumen, particularly if they contain polyunsaturated fatty acids in high amount. This mechanism protects alimentary substances against degradation by microbial enzymes. The bypass product significantly increased the propionate concentration of the rumen fluid, while the i-butyrate acid concentration decreased after feeding.

Taken together, the bypass product can be used in the usual, everyday amount (equivalent of 2-2.5% of the daily dry food intake) without having problems in the rumen fermentation parameters.

### EXAMPLE 4

### Production studies

*A preliminary study: nutrients contents, fatty acid composition of milk, milk yield (corn silage based feeding plus bypass omega-3 feed additive composition according to the invention, 0.25 kg*/*cow*/*day)*

The preliminary study was performed with 25 multiparous cows and producing low amount of milk (below 25 liters) at SOLUM Zrt. farm in Komárom (Hungary). The same 25 animals were used in the study during the 3 months experimental period. In the first period of the study the usual Hungarian corn silage - alfalfa haylage based ration was given to the animals. There was a 14-day pre-feeding period after the 1 month control period, when the composition of the milk was not investigated; the animals were accustomed to the same bypass feed additive product. Animals were given low-dose (0.25 kg/animal/day) bypass feed additive supplement (produced according to the method disclosed in Example 2) in the experimental period over the base amount of forage ("on top").

Milk was collected once a week (on Wednesday) and the main nutrient parameters of the milk were measured from the morning and afternoon milking (dry matter, protein-, fat- and lactose contents). Furthermore, the composition of the milk fat was studied from the mixed milks. Milk production was recorded daily and at every milking.
The animals received the following forage:

| **Feeds** | **Control period** | **Experimental period** |
|---|---|---|
| | *kg*/*cow*/*day* | |
| Corn silage | 20.0 | 20.0 |
| Alfalfa haylage | 8.5 | 8.5 |
| Hay | 3.5 | 3.5 |
| Corn | 1.5 | 1.5 |
| Extracted sunflower meal | 1.0 | 1.0 |
| Cukor Pack* (a molasses based product) | 0.5 | 0.5 |
| Premix (233-450)** | 0.2 | 0.2 |
| *Bypassomega-3 feed additive product**** | - | *0.25* |
| *Altogether (kg)* | *35.20* | *35.45* |

| | | |
|---|---|---|
| *Dealer*/*Manufacturer: *Solum Co.* (Komárom);***Vitafort Ltd.* (Dabas) ****Adexgo Ltd.* (Balatonfüred, experimental product) | | |

Main results of the experimental period:
- The amount of milk decreased slightly (-1.04 l/animal/day) due to the forage.
- The amount milk fat also decreased slightly (control: 5.26%; experimental: 4.81%).
- The dry matter and protein content of the milk did not change substantially.
- The sugar content of the milk increased significantly (control: 4.34%; experimental: 4.53%).
- The saturated fatty acid content decreased by a small amount.
- There were significant differences in the case of the following PUFAs between the two feeding periods: linolenic acid (C18:3), CLA (c9:t11), EPA (C20:5), docosadienoic acid (C22:2), DPA (C22:5).

### The most important n-3- and CLA-fatty acid levels in the morning and afternoon milks

| **Fatty acid group** | | **End points (%)** | **Average (%)** |
|---|---|---|---|
| ***Linolenic acid (C18:3). n-3*** | | | |
| | control | 0.28-0.43 | **0.37** |
| | experimental | 0.40-0.48 | **0.44** |
| ***CLA (c-9.t-11)*** | | | |
| | control | 0.36-0.48 | **0.42** |
| | experimental | 0.54-0.67 | **0.60** |
| ***EPA (C20:5). n-3*** | | | |
| | control | 0.02-0.04 | **0.03** |
| | experimental | 0.04-0.05 | **0.04** |
| ***DPA (C22:5). n-3*** | | | |
| | control | 0.06-0.07 | **0.06** |
| | experimental | 0.08-0.09 | **0.08** |
| ***DHA (C22:6). n-3*** | | | |
| | control | n.d. | - |
| | experimental | n.d. | - |

| | | | |
|---|---|---|---|
| *Note: in percent of total fatty acid* | | | |

### Production study I.

*Comparison of grass haylage plus rumen bypass feed additive composition of the invention and*/*or corn silage based ration*

The first on-site experiment was performed with 40-40 multiparous cows and producing middle amount of milk (below 30 liters) at SOLUM Zrt. farm in Komárom. Milk was collected once a week (on Wednesday) and the main parameters of the milk were measured from the morning and afternoon milkings (dry matter, protein-, fat- and lactose contents). Furthermore, the composition of the milk fat was studied from the mixed milks during the 1.5 months period. Milk production was recorded daily and at every milking.

Control animals were given corn silage-alfalfa haylage based ration, while the experimental group was given grass haylage ration and higher dosage (0.50 kg/animal/day) of the bypass composition.
The animals received the following forage:

| **Feeds** | **Control** | **Experimental** |
|---|---|---|
| Corn silage | 20 | - |
| Grass haylage | - | 18 |
| Alfalfa haylage | 7 | 7 |
| Hay | 3 | 2 |
| Corn (dry) | 2 | 3.5 |
| Corn (wet) | 3.5 | 3.5 |
| Extracted sunflower meal | 2 | 1 |
| Cukor Pack* (molasses based product) | 1.5 | 1.5 |
| Glycerine | 0.5 | 0.5 |
| Protopack** (a special concentrate) | 3 | 3 |
| Concentrate*** | 0.9 | - |
| Premix (233-450)*** | - | 0.3 |
| ***Bypass omega-3 feed additive product******* | - | ***0.5*** |

| | | |
|---|---|---|
| Manufacturer/Dealer: *Solum Co.; **J.O.B-Feed Ltd.; ***Vitafort Co. ****Adexgo Ltd. (experimental product) | | |

The main amounts of alimentary substances (dry matter, protein, NEI, etc.) were the same in the control and experimental forages.
Main results:
The amount of dry matter and fat concentration decreased in the milk due to the used forage (4.2 % milk fat in the control vs. 3.2% milk fat in experimental group) while the volume of the milk and its other parameters (protein and sugar levels) did not change substantially.
Milk fat composition:

### Saturated (SFA), mono-unsaturated (MUFA), poly-unsaturated fatty acids (PUFA)

| **Fatty acid groups** | | **End point (%)** | **Average (%)** |
|---|---|---|---|
| ***SFA*** | | | |
| | control | 63.34-67.03 | **64.35** |
| | experimental | 56.67-60.81 | **58.58** |
| ***MUFA*** | | | |
| | control | 26.45-30.36 | **29.11** |
| | experimental | 29.58-32.65 | **31.15** |
| ***PUFA*** | | | |
| | control | 3.49-4.39 | **3.85** |
| | experimental | 4.61-6.21 | **5.45** |

| | | | |
|---|---|---|---|
| *Note: in percent of total fatty acid* | | | |

As the data show, the new foraging method of the invention significantly changes the saturated, mono-unsaturated (MUFA) and poly-unsaturated fatty acid (PUFA) levels in the milk.

### The most important n-3- and CLA-fatty acid levels in the morning and afternoon milks

| **Fatty acid group** | | **End points (%)** | **Average (%)** |
|---|---|---|---|
| ***Linolenic acid (C18:3). n-3*** | | | |
| | control | 0.28-0.39 | **0.31** |
| | experimental | 0.53-0.80 | **0.60** |
| ***CLA (c-9. t-11)*** | | | |
| | control | 0.38-0.47 | **0.42** |
| | experimental | 1.00-1.97 | **1.41** |
| ***CLA (t-10.c-12)*** | | | |
| | control | 0.0-0.03 | **0.02** |
| | experimental | 0.03-0.06 | **0.04** |
| ***EPA (C20:5). n-3*** | | | |
| | control | 0.02 | **0.02** |
| | experimental | 0.04-0.08 | **0.06** |
| ***DPA (C22:5). n-3*** | | | |
| | control | 0.05 | **0.05** |
| | experimental | 0.09-0.1 | **0.09** |
| ***DHA (C22:6). n-3*** | | | |
| | control | n.d. | - |
| | experimental | 0.04-0.06 | **0.05** |

| | | | |
|---|---|---|---|
| *Note: percent of total fatty acid* | | | |

As the data show, the new foraging method of the invention significantly increased the levels of the n-3 fatty acids and CLA in the milk.

### Tasting

We ran tasting procedures several times during the experiment using the milks taken from the morning or afternoon milkings. Statistical calculations were made two times. There were ten reviewers at these organoleptic probes, they tasted the milks in random order two times (control and experimental milks). The reviewers did not find any significant differences between the control and experimental (produced by animals fed by feed complemented with the feed additive composition according to the invention) milk parameters (flavor, taste, color, general impression). This means that the foraging method of the invention did not influence the organoleptic parameters of the milk.

### Result of the accredited tasting probe

The organoleptic investigation took place after pasteurization and homogenization of the milk at different temperatures (72°C, 90°C and 110°C). The study was done by Campden BRI Hungary Non-profit Ltd. The control was a type of milk that can be purchased in every grocery shop ("Tolle Tej 2.8%", made by ESL technology). Each sample was tasted by 6 reviewers two times. The accredited tasting panel did not find any significant differences between the organoleptic parameters of the control milk and those of the experimental milk (produced using the feed additive composition of the invention) after it has been pasteurized at 90°C. The milk had pleasing, rich, sweetish and mildly boiled taste and flavor, without strange flavor and taste at all.

*Effect of pasteurization, condensation and drying on the milk fat content of the special milk produced according to the invention*
We have investigated the effect of mild pasteurization (72-76°C. 40 sec), condensation (condensed milk), or drying (fat milk-powder) on milk fat composition (control and experimental milk). It was found that the studied processes did not have any effect on the milk fat composition of the control and experimental milks (see below). The change due to the foraging was still maintained.

### Effect of pasteurization, condensation and drying on milk c9,t11 CLA and n-3 fatty acid content

| **Fatty acid** | **Names** | **Pasteurization** | | **Condensations** | | **Drying** | |
|---|---|---|---|---|---|---|---|
| | | *Control Experimental* | | *Control Experimental* | | *Control Experimental* | |
| CLA (c9, t11) | Conjugated linoleic acid (cis-9, trans-11) | 0.43 | 1.00 | 0.44 | 1.00 | 0.43 | 1.01 |
| C₁₈₃ (n-3) | Linolenic acid (ALA) | 0.37 | 0.63 | 0.48 | 0.61 | 0.50 | 0.65 |
| C₂₀₅ (n-3) | Eicosapentaenoic acid (EPA) | 0.03 | 0.06 | 0.04 | 0.06 | 0.03 | 0.06 |
| C₂₂₅ (n-3) | Docosapentaenoic acid (DPA) | 0.06 | 0.09 | 0.07 | 0.10 | 0.06 | 0.09 |
| C₂₂₆ (n-3) | Docosahexaenoic acid (DHA) | - | 0.05 | 0.01 | 0.06 | 0.01 | 0.06 |

| | | | | | | | |
|---|---|---|---|---|---|---|---|
| *Note: in percent of total fatty acid* | | | | | | | |

### EXAMPLE 5

### Production study II.

*Comparison of grass haylage alone and combined with the bypass feed additive composition of the invention*
The study has been going on at SOLUM Zrt. farm in Komárom from 11.01.2009, with 40 multiparous, high yielding cows (more than 30 liters). In the first stage of the experiment (3 weeks), animals were given corn silage - alfalfa haylage forage (preliminary period), then after a 14-day transition period animals were given grass haylage-based forage (control period). This period lasted for 1.5 months, then after a 14-day transition period animals were given grass haylage-based forage plus 0.5 kg bypass omega-3 product of the invention ("on top") (experimental period). We have collected milk samples once a week (on Wednesday) and the main parameters of the milk have been measured from the afternoon milking (dry matter, protein, fat and sugar contents). Furthermore, the composition of the milk fat has been studied from the mixed milks. Milk production was recorded daily and at every milking.
The animals received the following forage:

| | **Preliminary period** | **Control period** | **Experimental period** |
|---|---|---|---|
| Corn silage | 22 | - | - |
| Grass haylage | - | 20 | 20 |
| Alfalfa haylage | 9 | 8 | 8 |
| Hay | 2.5 | 2.5 | 2.5 |
| Corn (dry) | 2.8 | 4 | 4 |
| Corn (wet) | 2.5 | 2 | 2 |
| Extracted sunflower meal | 2.2 | 2 | 2 |
| Protected soybean meal | 1.3 | 1.5 | 1.5 |
| Rapeseed cake | 1.5 | | |
| Cukor Pack* (molasses based product) | 1.2 | 1.0 | 1.0 |
| Glycerine | 0.8 | 0.5 | 0.5 |
| Premix (233-450)** | - | 0.3 | 0.3 |
| Concentrate** | 1 | - | - |
| ***Bypass omega-3 feed additive product****** | **-** | **-** | ***0.*5** |

| | | | |
|---|---|---|---|
| *Dealer*/*Manufacturer: *Solum Co.* (Komárom);*** Vitafort Co.* (Dabas) ***Adexgo Ltd. (Balatonfüred, experimental product) | | | |

Milk fatty acid composition
Saturated (SFA), mono-unsaturated (MUFA), poly-unsaturated fatty acids (PUFA)

| **Fatty acid group** | | **End points (%)** | **Average (%)** |
|---|---|---|---|
| ***SFA*** | | | |
| | preliminary period | 64.67-67.07 | **66.04** |
| | control period | 60.82-67.58 | **64.46** |
| | experimental period | 57.25-62.80 | **59.66** |
| ***MUFA*** | | | |
| | preliminary period | 26.91-28.08 | **27.50** |
| | control period | 26.35-32.26 | **28.67** |
| | experimental period | 28.37-30.63 | **29.27** |
| ***PUFA*** | | | |
| | preliminary period | 3.87-4.28 | **4.04** |
| | control period | 3.63-4.49 | **4.02** |
| | experimental period | 4.82-6.56 | **5.73** |

| | | | |
|---|---|---|---|
| *Note: percent of total fatty acid* | | | |

*The most important n-3- and CLA fatty acid levels in the morning and afternoon milks*

| **Fatty acid group** | | **End points (%)** | **Average (%)** |
|---|---|---|---|
| ***Linolenic acid (C18:3). n-3*** | | | |
| | preliminary period | 0.35-0.42 | **0.37** |
| | control period | 0.54-0.57 | **0.56** |
| | experimental period | 0.66-0.71 | **0.70** |
| ***CLA (c-9. t-11)*** | | | |
| | preliminary period | 0.35-0.43 | **0.40** |
| | control period | 0.40-0.46 | **0.42** |
| | experimental period | 1.16-1.73 | **1.50** |
| ***CLA (t-10.c-12)*** | | | |
| | preliminary period | n.d. | - |
| | control period | n.d. | - |
| | experimental period | 0.04-0.08 | **0.05** |
| ***EPA (C20:5). n-3*** | | | |
| | preliminary period | 0.02-0.03 | **0.02** |
| | control period | 0.03-0.04 | **0.03** |
| | experimental period | 0.05-0.08 | **0.06** |
| ***DPA (C22:5). n-3*** | | | |
| | preliminary period | 0.06-0.07 | **0.07** |
| | control period | 0.07-0.08 | **0.08** |
| | experimental period | 0.09-0.11 | **0.10** |
| ***DHA (C22:6). n-3*** | | | |
| | preliminary period | n.d. | - |
| | control period | n.d. | - |
| | experimental period | 0.03-0.06 | **0.04** |

| | | | |
|---|---|---|---|
| *Note: percent of total fatty acid* | | | |

These data indicate that grass haylage ration alone made minimal changes in the milk fatty acid composition. Namely, the SFA percent decreased, while α-linolenic acid (ALA, C18:3) concentration increased. Administration of the bypass omega-3 product of the invention however, caused substantial changes in the different fatty acid groups (SFA, MUFA, PUFA) and in the concentration of n-3 and CLA-fatty acids, too.

## Claims

1. A solid rumen bypass feed additive composition comprising granules of a solid carrier carrying, up to 70% by weight, an oil comprising polyunsaturated fatty acid (PUFA), said granules being fully or partially covered by a coating comprising a hydrogenated fat and/or a wax the melting point of which is higher than room temperature.

2. The solid composition according to claim 1, wherein said solid carrier further carries hydrogenated fat.

3. The solid composition according to any preceding claim further comprising an antioxidant, preferably α-tocopheryl acetate.

4. The solid composition according to any preceding claim, wherein said PUFA comprising oil is selected from a group consisting of fish oil, linseed oil, rapeseed oil, soybean oil, pumpkinseed oil and any combinations thereof.

5. The solid composition according to any preceding claim, wherein said PUFA comprising oil is fish oil.

6. The solid composition according to any preceding claim, wherein said solid carrier is selected from a group consisting of minerals, mineral feed supplements, ground grains, cereal flakes, cereal byproducts and any combinations thereof.

7. The solid composition according to any preceding claim, wherein said hydrogenated fat is of natural origin and said wax is beeswax.

8. The solid composition according to any preceding claim, wherein the average diameter of said granules is around 1-2 mm.

9. A method for the production of a solid rumen bypass feed additive composition, wherein
(a) an oil comprising PUFA is mixed with a solid carrier and
(b) the mixture of step (a) is coated with a hydrogenated fat and/or wax the melting point of which is higher than room temperature.

10. The method according to claim 9, wherein hydrogenated fat is further mixed with said PUFA comprising oil and said solid carrier in step (a) and then the mixture obtained in step (a) is coated with said hydrogenated fat and/or wax the melting point of which is higher than room temperature in step (b).

11. The method of claim 9 or 10, wherein said coating is performed by adding melted hydrogenated fat and/or wax, under continuous stirring, to the mixture of step (a) and subsequently the mixture is allowed to cool to room temperature.

12. A method for producing PUFA-enriched milk or dairy products, comprising the steps of:
(a) complementing the feed of a milk-producing animal with a solid rumen bypass composition according to any of claims 1 to 8 or produced according to any of claims 9 to 11 and
(b) feeding the milk-producing animal with the complemented feed of step (a)
(c) obtaining milk from the milk-producing animal having been fed according to step (b).

13. The method of claim 12, wherein said complementing in step (a) provides a complemented feed which contains not more than 0.75% by weight of said PUFA comprising oil, preferably not more than 0.66% by weight, and more preferably not more than 0.35% by weight.

14. The method of claim 12 or 13 further comprising the step of
(d) preparing a PUFA-enriched dairy product from the PUFA-enriched milk obtained in step (c).

15. The method of claim 14, wherein said dairy product is milk powder or a dairy product having been produced therefrom.
